# EUROPEAN PATENT SPECIFICATION

(11) **EP 2 386 978 B1**
(45) Date of publication and mention of the grant of the patent: **15.01.2020**
(21) Application number: 11003876.7
(22) Date of filing: 11.05.2011
(51) Int. Cl.: B66F 5/02, G06F 21/60, G06Q 20/34

(54) **PERSONALIZATION DATA PROVIDING UNIT**
PERSONALISIERUNGSDATEN BEREITSTELLENDE EINHEIT
UNITÉ DE FOURNITURE DE DONNÉES DE PERSONNALISATION

(30) Priority: 14.05.2010 GB 201008026
(43) Date of publication of application: 16.11.2011
(73) Proprietor: Giesecke+Devrient Mobile Security GmbH, 81677 München (DE)
(72) Inventor: Kasim, Mohamad A., Northolt, UB5 5LT (GB)

(56) References cited:
- WO-A1-2008/037605
- WO-A2-99/19846
- US-A- 6 014 748
- US-A1- 2002 082 885

## Description

The present invention relates to a system for personalizing portable data carriers and in particular to a personalization data providing unit within such a system and further relates to a corresponding method for personalizing portable data carriers.

According to a common solution for personalizing portable data carriers a central unit provides the personalization data to a plurality of personalization units. The portable data carriers may be chip cards, security modules or portable USB tokens. Each personalization unit personalizes the data carriers e.g. by embossing, laser personalizing and chip personalizing the received personalization data to the data carriers.

WO 93/04433 A1 teaches to transmit personalization data to a personalization module in accordance with the requirements for this module. Some of the known systems assume that personalization takes place in an isolated environment and thus do not address data security within the personalization system. For example in WO 2007/087432 A2, personalization data are encrypted with a card individual key and decrypted only within the smart card. Other systems use complex encryption mechanisms when transmitting data over public networks thereby however being inflexible and rather slow in processing time.

WO 99/19846 A2 and US 2002/0082885A1 teach systems in which a central location uses transport encryption to the remotely located personalisation location. The personalisation system of US 6,014,748 B1 resolves a customer transport encryption upon receipt of encrypted personalisation data and adapts a used data format prior to transmission to a personalisation unit.

It is an object of the present invention to provide a secure personalization system which is particularly optimised in regard to flexibility and/or processing time. This object is achieved by the subject matter of the independent claims. Preferred embodiments of the invention are described in the dependent claims.

In the present solution the personalization data are transmitted in a system internal format from the providing unit to the personalization unit, the system comprising a data providing unit and a plurality of personalization units. The system internal format is defined in an application layer. The transmitted personalization data are then converted into a format of the personalization unit, namely from the system internal format to either a first application layer format of a first personalization unit or a second application layer format of a second personalization unit. The personalization unit uses the converted personalization data for personalizing the portable data carriers. The method in a system for personalizing portable data carriers further comprises: decrypting the personalization data in the data providing unit; re-encrypting the decrypted personalization data in the data providing unit before transmission and decrypting the transmitted, re-encrypted personalization data in the personalization unit before conversion.

The data providing unit stores the personalization data in an encrypted form, but does not transfer the already encrypted data to the personalization unit. This approach increases the flexibility of the system while maintaining a high level of data security. The encryption within the data providing unit may be selected and adapted irrespective of the remainder of the personalization system.

In a preferred embodiment the transmission encryption/decryption may be provided by a remote HSM service of the personalization system, which may be available to both the data providing unit (its delivery service) and the personalization unit.

The second decryption and/or the conversion is preferably performed or at least triggered by a post-transmission processing means, which then forwards converted personalization data to a main personalization unit of the personalization unit.

Furthermore, any encryption of personalization data at the application layer (by the customer for the data carrier) may be implemented independent of the encryption for transmission.

Preferably, the personalization data providing unit receives a request for personalization data from a personalization unit and transmits personalization data to the personalization unit. The personalization data providing unit is arranged in a personalization system comprising the data providing unit and a plurality of personalization units. After receiving the request the data providing unit further receives a data preparation parameter from the personalization unit. The data providing unit prepares the personalization data to be transmitted in accordance with the received data preparation parameter.

This solution provides optimised flexibility since the data providing unit does not need to know anything about the personalization unit. Thus it would not have to be adapted for example upon introducing new personalization units into the system.

It is further advantageous that the personalization unit determines the data preparation parameter. Compared to a solution in which the request already includes a data preparation parameter, by separating the steps of receiving the request and receiving the data preparation parameter the data providing unit is further improved. The personalization unit uses the same data contract with the data providing unit in order to build the data preparation parameters for the personalization data to be transmitted.

Preferably only selected data fields of the available data fields for the personalization data are provided for transmission in accordance with the received data preparation parameter, which comprises corresponding selection information. This approach effectively reduces the amount of data unnecessarily transmitted in the system. The personalization unit uses a list of available data fields and decides which of the data fields are required.

The Communication protocol between the data providing unit and the data receiving unit should indicate whether a channel encryption is used to encrypt and sign all the communication between the units. Optionally the data preparation parameter may as well comprise an encryption indicator. In accordance with the encryption indicator the personalization data will be encrypted or not before being transmitted to the personalization unit. The personalization unit thus may decide whether encrypted transmission is appropriate. Accordingly an unnecessary encryption step in the data providing unit can be avoided.

Preferably, each data field of a data row should be separately stored in the encrypted form. Hence only the requested data fields of the available data fields have to be decrypted.

The present data providing unit further benefits from an independent processing of personalization data and personalization control information. The personalization data will be used for personalizing the portable data carrier; i.e. it will be printed, embossed, magnetically recorded, optically recorded by laser or stored into a non-volatile memory to the data carrier. Personalization control information controls or configures the process of personalizing the data carrier. The personalization control information will be handled independently from the personalization data. Personalization control information for example comprises a prescribed order of processing steps within the personalization unit.

In a preferred embodiment the personalization units each comprise a post-transmission processing means and a main personalization unit. The main personalization unit performs the personalization of the portable data carriers by using the transmitted personalization data. The modular card processing system described in WO 93/04433 A1 is an example for a common main personalization unit. A post-transmission processing means may be implemented as a separate hardware unit arranged between the data providing unit and the main personalization unit or may be implemented as a software element which is added to the common main personalization unit and executed on the primary processor of the main personalization unit. This approach increases flexibility within the system, since reconfiguration of the main personalization unit or even use of different main personalization units can be compensated by corresponding post-transmission processing means such that the data providing unit will not have to be adapted.

In particular the post-transmission processing means is adapted for providing the data preparation parameter to the providing unit. In more detail, the post-transmission processing means also determines the data preparation parameter. The post-transmission processing means furthermore may decrypt the transmitted personalization data and forward the decrypted personalization data to the main personalization unit. A possible encryption of the transmitted personalization data is thus decoupled from the usage of the personalization data in the main personalization unit.

In order to increase security of the personalization data within the system, the transmission processing means limits the number of requests to one request at a time. The transmission processing means also counts the number of requests for personalization data available for the personalisation unit and limits the number of counted requests to a predetermined reference limit. These features provide a simple but efficient limitation of the amount of personalization data which is allowed to coexist outside data providing and receiving units within the system.

A further improvement for the security of the personalization data within the data providing unit is achieved by the following approach. The data providing unit comprises a service controller and internal services each having access to the resources of the providing unit. Internal services may provide data from the data providing unit for external devices such as the personalization units. The data providing unit further comprises boundary services, which are preferably performed on a separate hardware device, the boundary services having no access to the internal resources of the data providing unit. Boundary services are provided for receiving external input data for the data providing unit. The access rights within the data providing unit are thereby additionally adapted such that the processing of input data is more restricted and consequently slower than the processing/provision of personalization data.

In an improved implementation the data providing unit controls the provision of the personalization data in accordance with a predefined workflow scheme.

Further preferred implementation details and advantages will be described in the following with respect to the figures.
- Fig. 1: illustrates a personalization system comprising a data providing unit;
- Fig. 2: illustrates subunits of a data providing unit;
- Fig. 3: illustrates the data provision process from a data providing unit to a personalization unit; and
- Fig. 4: illustrates the processing of external data to be stored in the data providing unit.

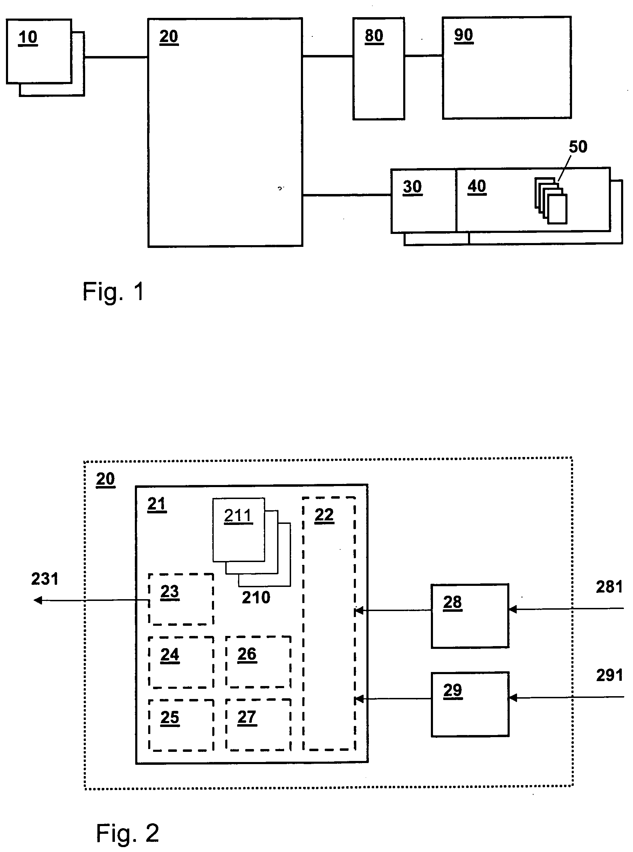

Fig. 1 illustrates a personalization system comprising a plurality of data input units 10 connected to a data providing unit 20. The data providing unit 20 is connected to a plurality of personalization units 30, 40. Each of the personalization units 30, 40 uses personalization data received from the data providing unit 20 for personalizing portable data carriers 50. The personalization system further comprises a synchronizing unit 80 which is connected to an enterprise resource planning unit 90.

The personalization unit 30, 40 comprises a post-transmission processing means 30 and a main personalization unit 40. WO 93/04433 A1 describes a modular card processing system, which is an example for a corresponding main personalization unit. Each of the main personalization units 40 may be adapted to personalize the portable data carriers by e.g. optical laser personalization, embossing, printing and/or chip personalization. Accordingly, the main personalization units may comprise different configurations of subunits (e.g. with or without embosser) and/or may be provided by different main personalization unit manufactures.

Personalization data may comprise multiple data rows (records). One data row is intended for the personalization of one data carrier. Each data row typically further comprises a plurality of data fields (for example: Last Name, First Name, Card-ID, Card Key No.1, ...).

Fig. 2 illustrates functional units of the data providing unit 20 illustrated in Fig. 1.

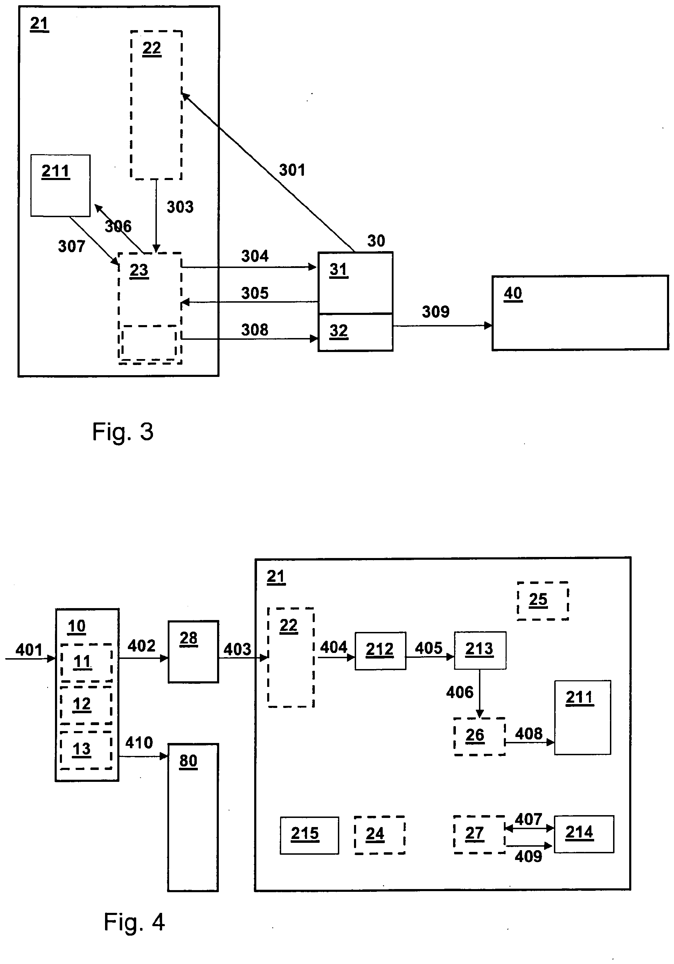

The data providing unit 20 comprises a server 21 as well as computer clients 28 and 29 each forming a separate hardware unit. The server 21 includes several services 22 to 27 which may be implemented as software modules. The internal services 23, 24, 25, 26 and 27 have the right to access internal resources 210 of the data providing unit 20. For example the data delivery service 23 transmitting personalization data to the personalization units of the personalization system has the right to access the database 211 storing the personalization data. The services of the data providing unit running on the clients 28, 29 are external services or boundary services, having no right to access the internal resources 210, in particular the personalization data database 211. The boundary services 28, 29 are arranged for receiving 281 and 291 external data, for example manual user input and/or external personalization data input from the data input units 10. The process of receiving incoming personalization data in the data providing unit 20 will be described in more detail below with reference of Fig. 4.

Fig. 3 illustrates the process of providing personalization data from the data providing unit 20 via the post-transmission processing means 30 to the main personalization unit 40.

The post-transmission processing means 30 sends a request 301 for personalization data to the data providing unit 20. The request is received by the system controller 22 which forwards this request to a data delivery service 23 in step 303. The data delivery service 23 sends an initial message to the post-transmission processing means 30 (step 304). The initial message includes information about the personalization data to be transmitted. The post-transmission processing means 30 sends a data preparation parameter in step 305 to the data delivery service 23. The data preparation parameter is determined based on the type (and/or configuration) of the main personalization unit 40 and/or a list of data fields and/or a security policy (e.g. an application level encryption indicator).

The data preparation parameter comprises selection information indicating those data fields, included in the list previously received, that the post-transmission processing means 30 would like to receive. Accordingly, the data delivery service 23 in step 306 for the plurality of data rows included in the personalization data to be transmitted requests only the selected data fields from the internal database 211.

The internal database 211 stores the personalization data in encrypted form und thus decrypts the personalization data before providing decrypted personalization data to the data delivery service 23 in step 307. Since the database 211 stores the data fields of the personalization data as separately encrypted information, only the requested data fields have to be decrypted. The data delivery service 23 now transmits in step 308 the personalization data, which have been prepared in accordance with the received data preparation parameter, to the personalization unit (its post-transmission processing means 30).

Depending on (the communication protocol and) the data preparation parameter received in step 305 the data delivery service 23 may encrypt the personalization prior to transmission. For example, if the overall policy within the system is set to "transmission encryption always on" an encryption indicator within the preparation parameter will always be set to the value of 1 to indicate the required additional encryption. If however an optimized processing time should be achieved, the post-transmission processing means 30 may decide whether the encryption indicator is set or not. For example, the post-transmission processing means 30 may recognize that the security policy for the present personalization data does not require encryption. Preferably, the transmission encryption will be used only, if the personalization data are not already encrypted at an application layer. An encryption at the application layer is known in common personalization systems. It may be used as an end-to-end encryption between the customer ordering the data carriers and the data carrier. The customer encrypts data to be personalized on the chip of the data carrier, the personalization data is handled in the encrypted form within the personalization system only and is finally decrypted by the chip of the data carrier.

As indicated in Fig. 3 the post-transmission processing means 30 comprises at least a first part 31 responsible for data exchange with the data providing unit 20 and the main personalization unit 40 and further comprises a post-processor 32. The post-processor 32 for example performs a decryption of the transmitted personalization data. Furthermore, the post-processor 32 may convert personalization data received from the data providing units 20 in a system internal format into a format of the main personalization unit 40.

The post-transmission processing means 30 then forwards the transmitted personalization data in step 309 to the main personalization unit 40.

Since the forwarded personalization data are decrypted data and consequently possibly readable as clear text (before being e.g. again securely handled within the main personalization unit), the data receiving unit 30 must find out the number of personalisation job data forwarded to the main personalisation data prior to submitting further request 301. The data receiving unit counts the number of personalisation job data forwarded to the main personalisation unit and limits the number to a predetermined reference limit. A reference limit may preferably be set to a value of one or at most to the value three. After a successful transmiting/receiving process the data providing unit updates the personalisation job status as delivered. To ensure that the data forwarded to the main personalisation unit is consumed and not left as readable clear text, the data receiving unit keeps track of the delivered data. If any delivered data is found idle after a predefined time limit then the data receiving unit must delete the data and notify the data providing unit to rollback the status of the personalisation job (un-delivered).

Fig. 4 illustrates the process of receiving external input data for the data providing unit.

The external data input unit 10 receives personalization data for the personalization system in step 401 from an external source, typically the customer providing their data for ordered data carriers. As known in the art the data input unit 10 may comprise an input format conversion module 11 converting the received personalization data from a customer format into the system internal format.

Furthermore, the data input unit 10 comprises decryption means 12, preferably in the form of a HSM or a remote HSM service, decrypting the personalization data received from the customer. An order information extraction service 13 extracts order information from the received data and forwards 410 the order information to the synchronizing unit 80. The synchronizing unit 80 performs a step of order duplication checking based on the order information. The synchronizing unit 80 is adapted to synchronize order information with the data providing unit 20 and/or the enterprise resource planning unit 90. New orders, deleted orders or a change for an existing order may be received from one of the data providing unit 20 and/or the enterprise resource planning unit 90. The synchronizing unit 80 stores received such order information and communicate it to the other unit respectively for synchronization purposes.

In step 402 the decrypted data are provided in the system internal format to a boundary service 28 of the data providing unit 20. In steps 403 and 404 the system controller 22 of the server 21 receives and forwards the personalization data, for example to an internal storage service. The received personalization data are stored 404 in a temporary internal storage area 212. An internal cryptographic service 25, which may be implemented by using a local HSM or a remote HSM, detects the arrival or existence of unencrypted data in the temporary storage area 212 and encrypts the previously unencrypted personalization data in step 405. The encrypted data are stored in the same or a separate internal storage area 213.

As illustrated by steps 406 and 407 the personalization data are further processed before being stored in step 408 to the internal database 211. The internal database 211 stores and provides the personalization data for retrieval by the data delivery service 23 of Fig. 3.

The cryptographic service 25 decrypts the personalization data stored in the temporary storage area 213 for a group management service 26. The group management service 26 in step 406 evaluates the personalization data. In particular it will perform substeps of group management and/or uniqueness checking.

The group management service 26 creates a uniqueness identifier for each data rows of the received personalization data based on the data carrier identifier included in the data rows. The uniqueness identifier consists of the data carrier identifier and additional information. The additional information may for example be a data carrier version number. This step seems to be unnecessary because the data carrier identifier already is a unique identifier for the data carrier in the system of personalized data carriers. However the present data providing unit 20 checks in step 407 the uniqueness of the uniqueness identifier using an identifier database 214 being separate from the internal personalization data database 211. If the uniqueness identifier(s) is unique, the corresponding personalization data row(s) is stored 408 in the internal personalization data database 211 and the uniqueness identifier(s) is stored 409 in the identifier database 214. The internal personalization data database 211 only stores current data, since any used personalization data is archived, preferably into an external archive database. Used personalization data are those personalization data being successfully personalized to a data carrier. On the contrary the corresponding uniqueness identifier in the identifier database 214 is not archived. The identifier database 214 thus comprises a history of uniqueness identifiers.

The group management service 26 may split the received data into groups, merge parts of the data into new groups and/or add data to existing groups. A group corresponds to a plurality of personalization data rows. A group may be used by the group management service 26 based on predefined criteria. One of the criteria could be separating the personalization data by customer orders. Another step may be sorting the personalization data rows by system relevant criteria such as group size, identical bill-of-material or identical set-up of the main personalization unit. The group management service 26 will create new groups but may as well add data rows to existing groups, the data of such groups being already stored in the database 211.

The group management service 26 then stores the grouped data into the internal database 211 in step 408. This database performs automatic data field encryption upon storage. Thus the personalization data is decrypted before being transmitted and possibly re-encrypted for transmission to one of the personalization units.

The process of providing personalization data may be performed in accordance with a workflow scheme. One of a plurality of existing workflow schemes will be assigned to the personalization data. Preferably a scheme is assigned to each group of personalization data rows. A workflow scheme preferably comprises the allowed states and state transitions.

The assignment could be performed by the group management service 26. A workflow service 24 monitors and enforces the processing restraints of the workflow scheme. A workflow storage area 215 holds the plurality of workflow schemes and for each group stores the assignment information (the number of the assigned workflow scheme) and the current state of the providing process for the group. The workflow service 24 receives information about status changes, for example it may receive the confirmation for storing the data into the database 211 from the group management service 26 and may amend the status accordingly. As further examples the data delivery service 23 will inform the workflow service 24 after transmission of the personalization data and the personalization unit 30, 40 will inform the workflow service 24 after having successfully personalized the personalization data.

A simplified example of a workflow scheme will be given in the following.

Some basic process states for personalization data could be:
- Created (after being created by the group management unit 26)
- On hold (when being put on hold before storage in the internal database 211)
- Pending (after being stored in the internal database 211)
- Scheduled (after being scheduled for production, e.g. by the system 90)
- Delivered (after being transmitted to the personalization unit 30,40)
- Completed (after being successfully personalized)
- Error (e.g. when being identified as non-unique).

The transitions from the state "created" may for example only be put on hold, enter into the Error state or store the data into the internal database. Personalization data in the state "pending" may not be delivered by the data delivery service before being scheduled by the enterprise resource planning system 90. However, personalization data handled in accordance with another workflow scheme may not require scheduling prior to personalization. When being in the Delivered state, the personalization data may enter to a Completed state, if they are successfully personalized, return to Pending, if the data have not been used for personalization, or enter in an Error state, if they could not be personalized. Depending on the type of error an Error state may be handled automatically or manually. Preferably different errors states will be used. Just to provide another example for differences between workflow schemes, in response to a specific error a first scheme could require manual interference by a process administrator. A second scheme could just ignore this state and automatically move to a next state, for example when the error is e.g. caused by an empty data field which is however expected to be empty for this personalization data.

## Claims

1. Method in a system for personalizing portable data carriers (50), the system comprising a personalization data providing unit (20) and a plurality of personalization units (30, 40), the method comprising the following steps:
- decrypting personalization data in the data providing unit (20);
- transmitting (308) the personalization data from the providing unit (20) to a first or second of the personalization units (30, 40)
- converting personalization data from the system internal format to a first or second application layer format of the first or second personalization unit respectively;
- using the converted personalization data for personalizing the portable data carriers (50) in the first or second personalization unit (30, 40);
- the data providing unit (20) stores the personalization data in an encrypted form;
- the decrypted personalization data are re-encrypted in the data providing unit (20) before being transmitted;
- the data providing unit (20) receives (305) a data preparation parameter from the first personalization unit (30, 40);
- the data providing unit (20) prepares (306, 307) the personalization data to be transmitted in accordance with the received data preparation parameter;
- wherein in the step of preparing only selected data fields of the available data fields in the personalization data are provided for transmission, the data preparation parameter indicating the selection;
- in the step of transmitting the personalization data are transmitted in an internal system format, the format being defined in the application layer;
- the transmitted, re-encrypted personalization data are correspondingly decrypted in the personalization unit (30, 40) before being converted; and
- in the step of converting the transmitted personalisation data are converted.

2. The method according to claim 1, wherein the personalization unit (30, 40) comprises transmission processing means (30) and a main personalization unit (40), the transmission processing means (30) forwarding transmitted personalization data to the main personalization unit (40), which performs the personalization of the portable data carriers.

3. The method according to claim 2, wherein the transmission processing means (30) decrypts the transmitted personalization data, converts the decrypted personalization data and forwards the converted personalization data to the main personalization unit (40).

4. The method according to claim 1, wherein the data preparation parameter comprises an encryption indicator, wherein in the step of preparing the personalization data are encrypted or not encrypted as indicated by the encryption indicator.

5. The method according to one of claims 1 to 4, wherein the personalization data comprises a plurality of personalization data rows, the data providing unit (20) group processing the personalization data before providing same for transmission and stores the group processed personalization data in encrypted form.

6. The method according to one of claims 1 to 5 wherein the personalization data comprises a plurality of personalization data rows, the data providing unit (20)
- receiving (403) input personalization data;
- temporarily encrypting (404) the received personalisation data; and
- decrypting the temporary encrypted personalization data before group processing (405) the personalization data.

7. The method according to one of claims 5 or 6, wherein the data providing unit (20) group processes (405) the personalization data by:
- splitting a personalization data collection into groups of personalization data rows; and/or
- merging personalization data rows into a group of personalization data; and/or
- adding personalization data rows to a stored group.

8. The method according to one of claims 1 to 7, wherein the data providing unit (20) manages the personalization data in accordance with a predefined workflow scheme, the workflow scheme preferably defining allowed state transitions for the personalization data having an assigned state.

9. The method according to one of claims 1 to 8,
wherein the data providing unit (20) comprises a service controller (22) and internal services (23,24) having access to resources (26) of the data providing unit (20) and boundary services (28,29) without access to the internal resources (26), wherein at least one internal service (23) provides data from the data providing unit and the boundary services (28, 29) receive (281, 291) external input data for the data providing unit (20).

10. The method according to one of claims 1 to 9, wherein the data receiving unit (30) counts the number of personalization data forwarded to main personalisation unit (40) and limits the number to a predetermined reference limit.

11. The method according to one of claims 1 to 10, wherein the data receiving unit (30) keeps track of the forwarded data and monitors it to make sure that it is consumed within a time limit, preferably it otherwise removes it and rollbacks the job status if the time limit is reached.

12. The method according to one of claims 1 to 11 wherein the data providing unit performs a step of uniqueness checking for the personalization data.

13. A system comprising a personalization data providing unit (20) and a plurality of personalization units (30,40) using personalization data for personalizing portable data carriers (50), the data providing unit (20) and the personalization units being adapted to perform a method according to one of steps 1 to 12.

## Patentansprüche

1. Verfahren in einem System zum Personalisieren von tragbaren Datenträgern (50), wobei das System eine Personalisierungsdaten-Bereitstellungseinheit (20) und eine Vielzahl von Personalisierungseinheiten (30, 40) umfasst, wobei das Verfahren die folgenden Schritte umfasst:
- Entschlüsseln von Personalisierungsdaten in der Datenbereitstellungseinheit (20);
- Übertragen (308) der Personalisierungsdaten von der Bereitstellungseinheit (20) zu einer ersten oder zweiten der Personalisierungseinheiten (30, 40).
- Konvertieren von Personalisierungsdaten aus dem systeminternen Format in ein erstes oder zweites Anwendungsschichtformat der jeweils ersten oder zweiten Personalisierungseinheit;
- Verwenden der konvertierten Personalisierungsdaten zum Personalisieren der tragbaren Datenträger (50) in der ersten oder zweiten Personalisierungseinheit (30, 40);
- die Datenbereitstellungseinheit (20) die Personalisierungsdaten in verschlüsselter Form speichert;
- die entschlüsselten Personalisierungsdaten in der Datenbereitstellungseinheit (20) vor der Übertragung wieder verschlüsselt werden;
- die Datenbereitstellungseinheit (20) einen Datenvorbereitungsparameter von der ersten Personalisierungseinheit (30, 40) empfängt (305);
- die Datenbereitstellungseinheit (20) die zu übertragenden Personalisierungsdaten gemäß dem empfangenen Datenvorbereitungsparameter vorbereitet (306, 307);
- wobei in dem Schritt des Vorbereitens nur ausgewählte Datenfelder der verfügbaren Datenfelder in den Personalisierungsdaten zur Übertragung vorgesehen sind, wobei der Datenvorbereitungsparameter die Auswahl anzeigt;
- im Schritt der Übertragung die Personalisierungsdaten in einem internen Systemformat übertragen werden, wobei das Format in der Anwendungsschicht definiert wird;
- die übertragenen, wiederverschlüsselten Personalisierungsdaten in der Personalisierungseinheit (30, 40) vor dem Konvertieren entsprechend entschlüsselt werden; und
- im Schritt des Konvertierens werden die übertragenen Personalisierungsdaten konvertiert.

2. Verfahren nach Anspruch 1, wobei die Personalisierungseinheit (30, 40) Übertragungsverarbeitungsmittel (30) und eine Hauptpersonalisierungseinheit (40) umfasst, wobei das Übertragungsverarbeitungsmittel (30) übertragene Personalisierungsdaten an die Hauptpersonalisierungseinheit (40) weiterleitet, die die Personalisierung der tragbaren Datenträger durchführt.

3. Verfahren nach Anspruch 2, wobei das Übertragungsverarbeitungsmittel (30) die übertragenen Personalisierungsdaten entschlüsselt, die entschlüsselten Personalisierungsdaten konvertiert und die konvertierten Personalisierungsdaten an die Hauptpersonalisierungseinheit (40) weiterleitet.

4. Verfahren nach Anspruch 1, wobei der Datenvorbereitungsparameter einen Verschlüsselungsindikator umfasst, wobei im Schritt des Vorbereitens die Personalisierungsdaten verschlüsselt oder nicht verschlüsselt werden, wie durch den Verschlüsselungsindikator angezeigt.

5. Verfahren nach einem der Ansprüche 1 bis 4, wobei die Personalisierungsdaten eine Vielzahl von Personalisierungsdatenzeilen umfassen, wobei die Datenbereitstellungseinheit (20) die Personalisierungsdaten gruppenverarbeitet, bevor sie diese zur Übertragung bereitstellt, und die gruppenverarbeiteten Personalisierungsdaten in verschlüsselter Form speichert.

6. Verfahren nach einem der Ansprüche 1 bis 5, wobei die Personalisierungsdaten eine Vielzahl von Personalisierungsdatenzeilen umfassen, wobei die Datenbereitstellungseinheit (20)
- Empfangen (403) von Eingabe-Personalisierungsdaten;
- temporäres Verschlüsseln (404) der empfangenen Personalisierungsdaten; und
- Entschlüsseln der temporär verschlüsselten Personalisierungsdaten vor dem Gruppenverarbeiten (405) der Personalisierungsdaten.

7. Verfahren nach einem der Ansprüche 5 oder 6, wobei die Datenbereitstellungseinheit (20) die Personalisierungsdaten gruppenverarbeitet (405) durch:
- Aufteilen einer Sammlung von Personalisierungsdaten in Gruppen von Personalisierungsdatenzeilen; und/oder
- Zusammenführen von Personalisierungsdatenzeilen zu einer Gruppe von Personalisierungsdaten; und/oder
- Hinzufügen von Personalisierungsdatenzeilen zu einer gespeicherten Gruppe.

8. Verfahren nach einem der Ansprüche 1 bis 7, wobei die Datenbereitstellungseinheit (20) die Personalisierungsdaten gemäß einem vordefinierten Workflow-Schema verwaltet, wobei das Workflow-Schema vorzugsweise zulässige Zustandsübergänge für die Personalisierungsdaten definiert, die einen zugeordneten Zustand aufweist.

9. Verfahren nach einem der Ansprüche 1 bis 8, wobei die Datenbereitstellungseinheit (20) eine Dienststeuerung (22) und interne Dienste (23, 24) mit Zugriff auf Ressourcen (26) der Datenbereitstellungseinheit (20) und Grenzdienste (28, 29) ohne Zugriff auf die internen Ressourcen (26) umfasst, wobei mindestens ein interner Dienst (23) Daten von der Datenbereitstellungseinheit bereitstellt und die Grenzdienste (28, 29) externe Eingabedaten für die Datenbereitstellungseinheit (20) empfangen (281, 291).

10. Verfahren nach einem der Ansprüche 1 bis 9, wobei die Datenempfangseinheit (30) die Anzahl der an die Hauptpersonalisierungseinheit (40) weitergeleiteten Personalisierungsdaten zählt und die Anzahl auf ein vorbestimmtes Referenzlimit limitiert.

11. Verfahren nach einem der Ansprüche 1 bis 10, wobei die Datenempfangseinheit (30) die weitergeleiteten Daten verfolgt und überwacht, um sicherzustellen, dass sie innerhalb eines Zeitlimits verbraucht werden, wobei ansonsten vorzugsweise die Datenempfangseinheit (30) die Daten entfernt und den Auftragsstatus zurücksetzt, wenn das Zeitlimit erreicht wird.

12. Verfahren nach einem der Ansprüche 1 bis 11, wobei die Datenbereitstellungseinheit einen Schritt der Einzigartigkeitsprüfung für die Personalisierungsdaten durchführt.

13. Ein System, umfassend eine Personalisierungsdaten-Bereitstellungseinheit (20) und eine Vielzahl von Personalisierungseinheiten (30, 40) unter Verwendung von Personalisierungsdaten zum Personalisieren von tragbaren Datenträgern (50), wobei die Datenbereitstellungseinheit (20) und die Personalisierungseinheiten angepasst sind, um ein Verfahren gemäß einem der Schritte 1 bis 12 durchzuführen.

## Revendications

1. Procédé dans un système destiné à personnaliser des supports de données portables (50), le système comprenant une unité de fourniture de données de personnalisation (20) et une pluralité d'unités de personnalisation (30,40), le procédé comprenant les étapes consistant à :
- déchiffrer des données de personnalisation dans l'unité de fourniture de données(20) ;
- transmettre (308) les données de personnalisation de l'unité de fourniture (20) à une première ou seconde unité parmi les unités de personnalisation (30, 40) ;
- convertir les données de personnalisation du format interne de système en un premier ou second format de couche d'application respectivement de la première ou seconde unité de personnalisation ;
- utiliser les données de personnalisation converties pour personnaliser les supports de données portables (50) dans la première ou seconde unité de personnalisation (30, 40) ;
- l'unité de fourniture de données (20) stocke les données de personnalisation sous une forme chiffrée ;
- les données de personnalisation déchiffrées sont à nouveau chiffrées dans l'unité de fourniture de données (20) avant d'être transmises ;
- l'unité de fourniture de données (20) reçoit (305) un paramètre de préparation de données de la première unité de personnalisation de données (30, 40) ;
- l'unité de fourniture de données (20) prépare (306, 307) les données de personnalisation à transmettre conformément au paramètre de préparation de données reçu ;
- dans lequel lors de l'étape de préparation, seuls des champs de données sélectionnés parmi les champs de données disponibles dans les données de personnalisation sont fournis pour la transmission, le paramètre de préparation de données indiquant la sélection ;
- lors de l'étape de transmission, les données de personnalisation sont transmises dans un format de système interne, le format étant défini dans la couche d'application ;
- les données de personnalisation transmises et à nouveau chiffrées sont déchiffrées de manière correspondante dans l'unité de personnalisation (30, 40) avant d'être converties, et
- lors de l'étape de conversion, les données de personnalisation transmises sont converties.

2. Procédé selon la revendication 1, dans lequel l'unité de personnalisation (30, 40) comprend un moyen de traitement de transmission (30) et une unité de personnalisation principale (40), le moyen de traitement de transmission (30) transférant des données de personnalisation transmises à l'unité de personnalisation principale (40), laquelle exécute la personnalisation des supports de données portables.

3. Procédé selon la revendication 2, dans lequel le moyen de traitement de transmission (30) déchiffre les données de personnalisation transmises, convertit les données de personnalisation déchiffrées, et renvoie les données de personnalisation converties à l'unité de personnalisation principale (40).

4. Procédé selon la revendication 1, dans lequel le paramètre de préparation de données comprend un indicateur de chiffrement, dans lequel lors de l'étape de préparation, les données de personnalisation sont chiffrées ou non chiffrées comme indiqué par l'indicateur de chiffrement.

5. Procédé selon l'une quelconque des revendications 1 à 4, dans lequel les données de personnalisation comprennent une pluralité de rangées de données de personnalisation, l'unité de fourniture de données (20) traitant en groupe les données de personnalisation afin de fournir celles-ci pour transmission, et stockant les données de personnalisation traitées en groupe sous forme chiffrée.

6. Procédé selon l'une quelconque des revendications 1 à 5, dans lequel les données de personnalisation comprennent une pluralité de rangées de données de personnalisation, l'unité de fourniture de données (20)
- recevant (403) des données de personnalisation d'entrée ;
- chiffrant de manière temporaire (404) les données de personnalisation reçues, et
- déchiffrant les données de personnalisation chiffrées de manière temporaire avant le traitement en groupe (405) des données de personnalisation.

7. Procédé selon la revendication 5 ou 6, dans lequel l'unité de fourniture de données (20) traite en groupe (405) les données de personnalisation en :
- séparant une collecte de données de personnalisation en groupes de rangées de données de personnalisation, et/ou
- fusionnant des rangées de données de personnalisation en un groupe de données de personnalisation, et/ou
- ajoutant des rangées de données de personnalisation dans un groupe stocké.

8. Procédé selon l'une quelconque des revendications 1 à 7, dans lequel l'unité de fourniture de données (20) gère les données de personnalisation conformément à un schéma de processus prédéterminé, le schéma de processus définissant de préférence des transitions d'état autorisé pour les données de personnalisation présentant un état attribué.

9. Procédé selon l'une quelconque des revendications 1 à 8, dans lequel l'unité de fourniture de données (20) comprend un contrôleur de services (22) et des services internes (23, 24) ayant accès à des ressources (26) de l'unité de fourniture de données (20), et des services en frontière (28, 29) sans accès aux ressources internes (26), dans lequel au moins un service interne (23) fournit des données à partir de l'unité de fourniture de données, et les services en frontière (28, 29) reçoivent (281, 291) des données d'entrée externes pour l'unité de fourniture de données (20).

10. Procédé selon l'une quelconque des revendications 1 à 9, dans lequel l'unité de réception de données (30) compte le nombre de données de personnalisation transférées à l'unité de personnalisation principale (40), et limite le nombre à une limite de référence prédéterminée.

11. Procédé selon l'une quelconque des revendications 1 à 10, dans lequel l'unité de réception de données (30) suit les données transférées et les surveille afin de s'assurer qu'elles sont consommées dans les limites d'un délai ; sinon, de préférence elle les retire et répète l'état de travail si le délai est expiré.

12. Procédé selon l'une quelconque des revendications 1 à 11, dans lequel l'unité de fourniture de données exécute une étape de vérification de nature unique pour les données de personnalisation.

13. Système comprenant une unité de fourniture de données de personnalisation (20) et une pluralité d'unités de personnalisation (30, 40) utilisant des données de personnalisation pour personnaliser des supports de données portables (50), l'unité de fourniture de données (20) et les unités de personnalisation étant aptes à exécuter un procédé selon l'une quelconque des revendications 1 à 12.
